# EUROPÄISCHE PATENTSCHRIFT

(11) **EP 2 530 351 B1**
(45) Veröffentlichungstag und Bekanntmachung des Hinweises auf die Patenterteilung: **21.01.2015**
(21) Anmeldenummer: 12165230.9
(22) Anmeldetag: 23.04.2012
(51) Int. Cl.: G02B 7/02, F16F 1/373, F21V 17/16, G02B 7/00

(54) **Optikträger**
Lens holder
Support optique

(30) Priorität: 28.04.2011 DE 102011002299
(43) Veröffentlichungstag der Anmeldung: 05.12.2012
(73) Patentinhaber: Sick AG, 79183 Waldkirch (DE)
(72) Erfinder: Scholder, Jochen, 79183 Waldkirch (DE); Lutz, Jochen, 79261 Gutach (DE)
(74) Vertreter: Hehl, Ulrich

(56) Entgegenhaltungen:
- EP-A2- 1 174 748
- DE-T2- 69 322 822
- GB-A- 2 058 389
- US-A1- 2006 044 455

## Beschreibung

Die vorliegende Erfindung betrifft einen Optikträger für einen optoelektronischen Sensor und ein Verfahren zur Montage des Optikträgers.

Bekannt sind Optikträger, welche in einem Gehäuse einer optoelektronischen Sensoranordnung eingesetzt werden, um ein optisches Element und ein zugehöriges Sende- und/oder Empfangselement bzw. die zugehörige Sende- und Empfangselektronik der optoelektronischen Sensoranordnung relativ zueinander zu positionieren. Dazu weist der Optikträger wenigstens eine Klemmfeder und wenigstens ein Gegenlager auf, wobei zwischen der wenigstens einen Klemmfeder und dem wenigstens einen Gegenlager das optische Element klemmbar ist.

Bei den bekannten Optikträgern sind die Klemmfeder und das Gegenlager in einem Teil integriert und somit in ihrer relativen Lage zueinander fixiert. Um eine exakte Positionierung zu ermöglichen, müssen die Klemmfeder und das Gegenlager mit hoher Genauigkeit gefertigt werden, was hohe Herstellkosten, insbesondere hohe Werkzeugkosten, zur Folge hat. Trotzdem können oft inakzeptable Toleranzen auftreten. Zudem ist das Klemmmaß für das optische Element durch die Integration von Klemmfeder und Gegenlager in einen einteiligen Optikträger begrenzt, was dazu führt, dass eine Lockerung des Sitzes des optischen Elements auftreten kann.

Bekannt ist weiter die Befestigung einer Linse durch Kleben. Dies bedingt jedoch einen aufwändigen Fügeprozess und es besteht die Gefahr, dass der Klebstoff auf die optischen Teile gelangt und die Funktion der Optik negativ beeinflusst.

Weiter ist es bekannt eine Linse durch Schweißen, schrauben oder Verstemmen zu befestigen. Diese Verfahren erfordern jedoch viel Platz auf einem Optikträger, der meist nicht zur Verfügung steht. Weiter verursachen diese Verfahren aufwändige Fertigungsprozesse und schränken die Werkstoffauswahl ein.

Die DE 693 22 822 T2 offenbart eine zusammendrückbare und elastische Dichtung zwischen einer Linse und einem Linsenklemmring. Das Zusammendrücken der Dichtung sorgt für die Einspannung der Linse.

In der DE 35 21 640 C2 sind zur symmetrischen Anordnung einer Linse in einer Halterung einzelne elastische Rippen vorgesehen.

Die Aufgabe besteht darin, eine vereinfachte Befestigung eines optischen Elements bereitzustellen, die wenig Bauraum beansprucht und größere Toleranzen für die notwendigen Komponenten ermöglicht.

Die Aufgabe wird gelöst durch einen Optikträger mit den Merkmalen nach Anspruch 1.

Die Aufgabe wird weiter durch ein Verfahren mit den Merkmalen nach Anspruch 6 gelöst.

Ein Federweg des elastischen Ausgleichselements liegt beispielsweise bei einem O-Ring als elastisches Ausgleichselement, üblicherweise bei ca. 15% des Querschnittdurchmessers. Das bedeutet, dass unter Berücksichtigung einer Mindestverpressung von 5% nur noch 10% für den Toleranzausgleich verbleiben. Je dünner der Querschnittsdurchmesser des elastischen Ausgleichselements, desto geringer ist der mögliche Toleranzausgleich, was bei einer Miniaturisierung ein Problem darstellt. Der Anpressdruck wird über die Härte des elastischen Ausgleichselements eingestellt.

Gemäß der Erfindung wird durch die Ausgleichsöffnung ein Federweg des ringförmigen elastischen Ausgleichselements verlängert. Mit der vorliegenden Erfindung ist es nun möglich diese oben beschriebene Begrenzung zu vermeiden, indem der elastische Weg nicht nur durch das elastische Ausgleichselement selbst bestimmt wird, sondern auch durch die Abmessungen der Ausgleichsöffnung und durch die Höhe der Haltevorsprünge.

Durch die erfindungsgemäße Vorrichtung wird die optische Komponente präzise positioniert. Durch die vorgesehenen Haltevorsprünge und die korrespondierenden Ausgleichsöffnungen wird die optische Komponente nur an einzelnen Punkten gespannt. Das elastische Ausgleichselement wird dabei durch den Haltevorsprung in die Ausgleichsöffnung gedehnt und ragt dabei in die Ausgleichsöffnung. Durch die Dehnung können mehr Toleranzen aufgenommen werden als bei einer flächigen Verpressung des elastischen Ausgleichselements. Neben der Dehnung ist auch eine Kombination von Dehnung und Verpressung möglich, bei der zusätzlich das elastische Ausgleichselement zwischen dem ersten Element und dem zweiten Element, zumindest abschnittsweise verpresst wird.

Die Ausgleichsöffnungen sind dabei weiter oder größer als die Haltevorsprünge ausgebildet. Dadurch ist zwischen dem Haltevorsprung und dem Rand der Ausgleichsöffnung Platz für einen Federweg des elastischen Ausgleichselements.

Die Haltevorsprünge sind radial zu einer optischen Achse der optischen Komponente ausgedehnt. Die Haltevorsprünge befinden sich dabei beispielsweise seitlich an der optischen Komponente. Durch die radial angeordneten Haltevorsprünge ist eine kompakte Bauform des ersten oder zweiten Elements und eine gute Kräfteverteilung auf die Haltevorsprünge gewährleistet.

Durch die erfindungsgemäße Lösung ist die optische Komponente zusätzlich gegen ein Verdrehen gesichert. Dadurch, dass das elastische Ausgleichselement durch die Haltevorsprünge in die Ausgleichsöffnungen gedrückt wird und somit in die Ausgleichsöffnung ragt, entsteht eine Verrastung zwischen den Haltevorsprüngen und den Ausgleichsöffnungen, wodurch die optische Komponente gegen eine Verdrehung gesichert ist.

In Weiterbildung der Erfindung ist das erste Element oder das zweite Element ein Grundträger oder ein Klemmteil. Der Grundträger oder das Klemmteil weist beispielsweise eine Referenzfläche auf, die definierte Abstände aufweist zu den Sende- und/oder Empfangselementen. Dadurch wird die optische Komponente automatisch zu einem Sende- und/oder Empfangselement positioniert.

In einer bevorzugten Ausführungsform der Erfindung weist der Grundträger und/oder das Klemmteil vorzugsweise eine Öffnung für Lichtstrahlen auf. Durch die Öffnung können die Lichtstrahlen durch den Grundträger oder das Klemmteil gelangen. Dadurch kann der Grundträger oder das Klemmteil die optische Komponente vollumfänglich umschließen, wodurch eine höhere Stabilität, insbesondere Verwindungssteifigkeit entsteht.

In einer bevorzugten Ausführungsform ist die optische Komponente als Linse ausgebildet. Durch eine einzige Linse pro Sendelement oder Empfangselement ist die optische Komponente sehr einfach und kompakt ausgebildet. Die Linse ist dabei vorzugsweise als Sammellinse ausgebildet, um ein Lichtstrahlenbündel oder einen Lichtstrahlkegel zu erzeugen oder empfangenes Licht auf ein Empfangselement zu fokussieren. Die Linse kann auch vorgesehen sein, um einen Laserstrahl zu bündeln.

In Weiterbildung der Erfindung weist das erste Element und/oder das zweite Element mindestens ein Befestigungsmittel auf. Durch das Befestigungsmittel kann das erste und zweite Element direkt miteinander verbunden und arretiert werden ohne dass zusätzliche Komponenten notwendig sind. Die Befestigungsmittel können in dem ersten oder zweiten Element direkt integriert sein, beispielsweise einstückig mit dem ersten und oder zweiten Element gebildet sein. Durch die Befestigungsmittel kann auch gleichzeitig die finale Position zwischen dem ersten Element und dem zweiten Element vorgegeben werden.

In Weiterbildung der Erfindung ist das Befestigungsmittel durch eine Schnappvorrichtung gebildet. Durch die Schnappvorrichtung wird beispielsweise das Klemmteil einfach durch einen Schnappmechanismus an dem Grundträger befestigt. Durch die Schnappvorrichtung entfallen weitere Befestigungsteile. Sobald das erste oder zweite Element, beispielsweise das Klemmteil, die vorgesehene Position erreicht hat, rastet die Schnappvorrichtung ein und das Klemmteil ist an dem Grundträger befestigt und genau arretiert. Eine Schnappvorrichtung hat den Vorteil, dass diese bei einer final zu ereichenden Position zwischen dem ersten und dem zweiten Element selbstständig arretiert wird. So ist eine sichere Positionierung des ersten und zweiten Elements zueinander gewährleistet.

Im Folgenden wird die Erfindung anhand von Ausführungsbeispielen unter Bezugnahme auf die Zeichnung im Einzelnen erläutert.

In der Zeichnung zeigt:
Figur 1 einen optoelektronischen Sensor;
Figur 2 einen Grundträger;
Figur 3 den Grundträger mit optischer Komponente;
Figur 4 den Optikträger mit elastischem Ausgleichselement;
Figur 5 den Optikträger mit Klemmteil;
Figur 6 den Optikträger mit der Reihenfolge zur Montage der einzelnen Komponenten;
Figuren 6a und 6b einzelnen Teile des Optikträgers.
Figur 7 den Optikträger in einer Draufsicht und Figur 8 einen Schnitt durch den Optikträger;
Figuren 9 bis 12 weitere Ausführungsbeispiele von Optikträgern.

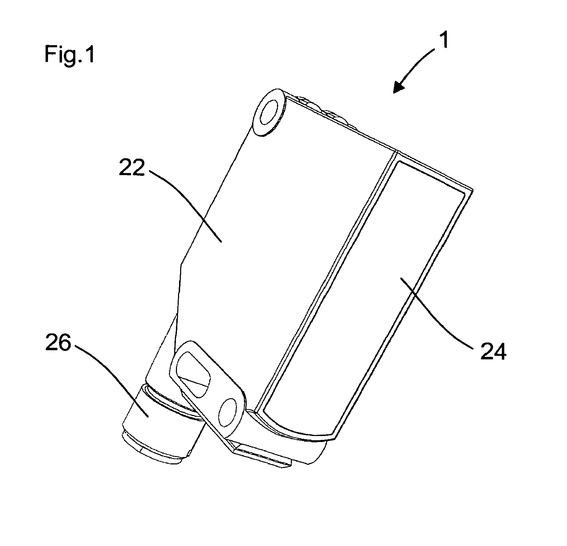

Figur 1 zeigt einen optoelektronischen Sensor 1 mit einem Gehäuse 22, einer Frontscheibe 24 und einem elektrischen Anschluss 26. Derartige optoelektronische Sensoren 1 sind als Lichtschranke, Reflexionslichtschranke, Lichttaster, Entfernungsmesser ausgebildet. Hierzu sind in dem Gehäuse 22 wenigstens ein Lichtsender und/oder wenigstens ein Lichtempfänger angeordnet, die mit einer elektronischen Steuer- und Auswerteeinheit verbunden sind. Für eine Beeinflussung der Lichtstrahlen des Lichtsenders und/oder Lichtempfängers sind hinter der Frontscheibe 24 im Gehäuseinneren optische Komponenten angeordnet. Die Lichtstrahlen gelangen nach einer Remission oder Reflexion auf einem Objekt durch die Frontscheibe auf den Lichtempfänger zur Objektdetektion. Das Gehäuse 22 kann aus Kunststoff oder Edelstahl hergestellt sein. Für die Frontscheibe 24 wird meist eine Kunststoffscheibe oder auch eine Glasscheibe verwendet. In allen nachfolgenden Figuren sind gleiche Teile mit identischen Bezugszeichen versehen.

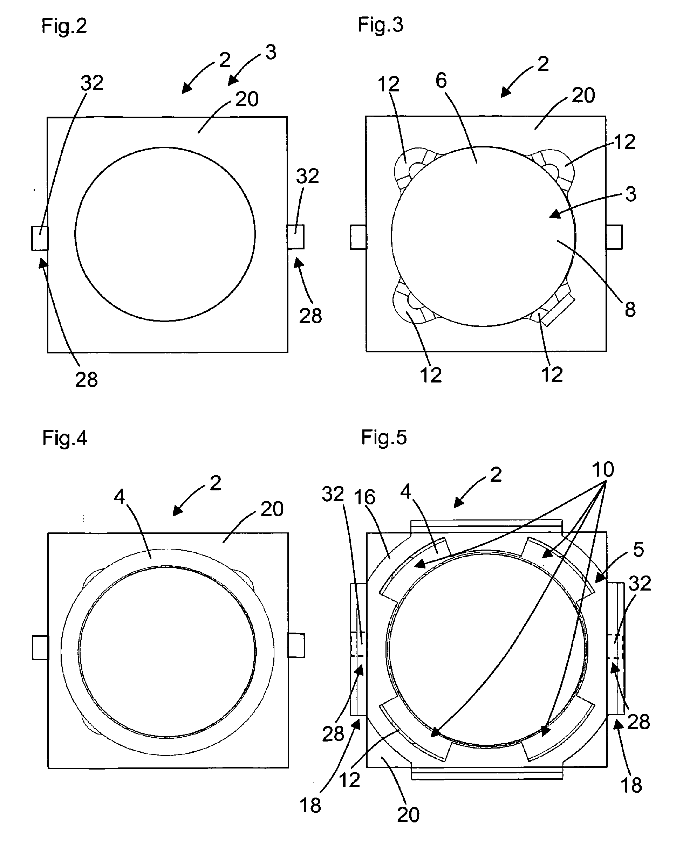

Figur 2 zeigt einen Grundträger 20 für den Optikträger 2. Der Grundträger 20 weist in diesem Ausführungsbeispiel eine quadratische oder rechteckige Grundform auf. Jedoch sind auch andere Formen des Grundträgers 20 denkbar. In der Mitte des Grundträgers 20 ist eine kreisförmige Öffnung für Lichtstrahlen vorgesehen, durch welche die Lichtstrahlen eines Lichtsenders/Sendeelements oder Lichtstrahlen für einen Lichtempfänger/Empfangselements treten können. An zwei gegenüberliegenden Seiten des Grundträgers ist jeweils eine Befestigungsaufnahme 32 als Befestigungsmittel 28 für ein nicht dargestelltes Klemmteil vorgesehen.

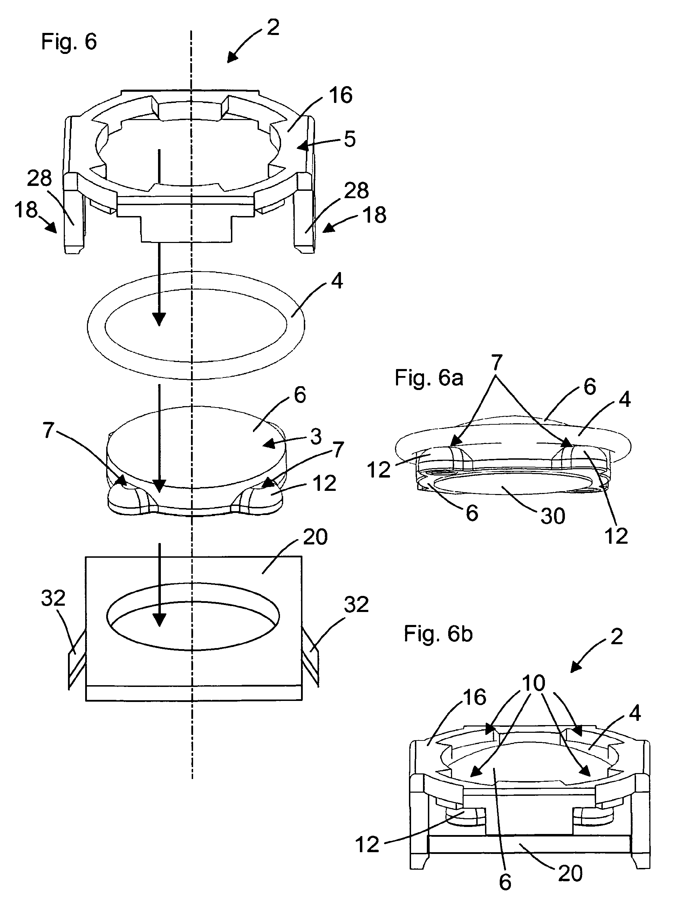

Figur 3 zeigt den Grundträger 20 aus Figur 2 mit einer auf dem Grundträger 20 angeordneten optischen Komponente 6 als erstes Element 3. Die optische Komponente 6 kann beispielsweise ein refraktives optisches Element, eine Linse 8, eine Kunststofflinse, eine Doppellinse, ein diffraktives optisches Element oder eine andere optische Komponente sein. Die optische Komponente 6 weist mindestens zwei Haltevorsprünge 12 auf. In dem gezeigten Beispiel sind vier Haltevorsprünge 12 in gleichen Abständen voneinander am Umfang der optischen Komponente 6 angeordnet. Es ist auch denkbar, drei oder mehr als vier Haltevorsprünge 12 anzuordnen. Jedoch ist eine Anzahl von mindestens drei bis maximal zehn Haltevorsprüngen 12 optimal, insbesondere drei bis sechs und besonders bevorzugt vier Haltevorsprünge 12. Die optische Komponente 6 kann dabei mit den Haltevorsprüngen 12 und/oder direkt mit dem Rand der optischen Komponente 6 auf dem Grundträger 20 aufliegen. Zur Aufnahme der optischen Komponente 6 in der Öffnung des Grundträgers 20 weist die optische Komponente 6 einen Vorsprung auf, der in die Öffnung des Grundträgers 20 greift, wodurch die optische Komponente 6 gegen eine radiale Verschiebung gesichert ist. In Figur 6a ist die optische Komponente 6 mit dem Vorsprung 30 in einer perspektivischen Ansicht gezeigt.

Figur 4 zeigt den Optikträger 2 aus Figur 3 mit zusätzlich angeordnetem ringförmigen elastischen Ausgleichselement 4. Das elastische Ausgleichselement 4 ist dabei um die optische Komponente 6 herum angeordnet. Das elastische Ausgleichselement 4 wird durch eine Spannkraft in radialer Richtung an der optischen Komponente 6 gehalten. In Figur 6a ist die Anordnung des elastischen Ausgleichselementes 4 an der optischen Komponente 6 perspektivisch dargestellt. Das elastische Ausgleichselement 4 liegt dabei oberhalb der Haltevorsprünge 12 an der optischen Komponente 6 an.

Figur 5 zeigt den Optikträger 2 aus Figur 4 mit zusätzlich angeordnetem Klemmteil 16 als zweites Element 5. Das Klemmteil 16 wird über die optische Komponente 6 mit dem elastischen Ausgleichselement 4 gestülpt und dann in axialer Richtung zu der optischen Komponente 6 in Richtung des elastischen Ausgleichselements 4 gedrückt. Das Klemmteil kann aus Kunststoff oder Metall, beispielsweise Federstahl, oder Federbronze hergestellt sein. Die Schnappvorrichtungen 18 des Klemmteils greifen in die Befestigungsaufnahme 32 des Grundträgers 20 ein, wodurch das Klemmteil befestigt wird. Die Schnappvorrichtungen 18 bilden zusammen mit der Befestigungsaufnahme 32 das Befestigungsmittel 28. Zwischen den Haltevorsprüngen 12 und den Ausgleichsöffnungen 10 wird die optische Komponente durch das elastische Ausgleichselement 4 gehalten.

Figur 6 zeigt den Optikträger 2 mit dem Grundträger 20, der optischen Komponente 6 als erstes Element 3, dem elastischen Ausgleichselement 4 und dem Klemmteil 16 als zweites Element 5 in einer schematischen explosionsartigen Zeichnung. Gemäß Figur 6 wird das Verfahren zur Montage des Optikträgers 2 erläutert. Figur 6 zeigt die Reihenfolge der Montage der einzelnen Komponenten für den Optikträger 2. In die Öffnung des Grundträgers 20 wird die optische Komponente 6 eingelegt. Daraufhin wird das elastische Ausgleichselement 4 an der optischen Komponente 6 angebracht. Auf der Auflagefläche 7 liegt das elastische Ausgleichselement 4 auf, wobei die Haltevorsprünge aus der Auflageebene 7 des elastischen Ausgleichselementes 4 hervorstehen.

Das auf der optischen Komponente 6 angeordnete elastische Ausgleichselement 4 ist in Figur 6a explizit perspektivisch dargestellt. Die Haltevorsprünge 12 der optischen Komponente 6 sind abgerundet ausgeführt. Die Haltevorsprünge 12 stehen dabei aus einer Auflageebene 7 des ringförmig elastischen Ausgleichselementes 4 hervor. Es ist auch möglich, zuerst das elastische Ausgleichselement 4 an der optischen Komponente 6 zu befestigen und dann die optische Komponente 6 in den Grundträger 20 einzusetzen. Final wird dann das Klemmteil 16 auf den Grundträger 20 mit der optischen Komponente 6 und dem elastischen Ausgleichselement 4 aufgesetzt und mit den Schnappvorrichtungen 18 in der Befestigungsaufnahme 32 eingeschnappt.

Figur 6b zeigt den Optikträger 2 final montiert mit den in Figur 6 gezeigten und beschriebenen Komponenten. Das elastische Ausgleichselement 4 ragt dabei abschnittsweise in die Ausgleichsöffnungen 10 des Klemmteils 16.

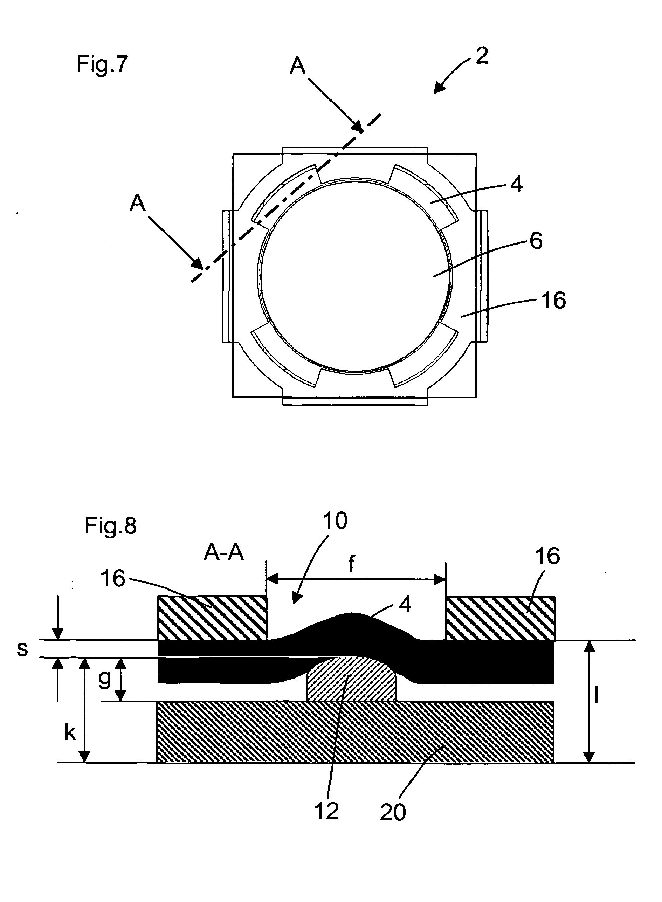

Figur 7 zeigt eine schematische Draufsicht auf den final montierten Optikträger 2 aus Figur 6b. Ein Schnitt entlang der Linie A-A ist in Figur 8 dargestellt.

Figur 8 zeigt eine schematisch Schnittdarstellung entlang der Linie A-A aus Figur 7. Auf dem Grundträger 20 liegt dabei ein Haltevorsprung 12 der optischen Komponente auf. Der Haltevorsprung 12 weist hierbei die Höhe g auf. Von dem Klemmteil 16 wird das elastische Ausgleichselement 4 gegen den Grundträger 20 gedrückt. Das Klemmteil 16 ist dabei in der eingeschnappten finalen Position dargestellt, wobei ein Klemmmaß mit dem Bezugszeichen k angegeben ist. Ein Elastizitätsmaß ist mit dem Bezugszeichen s angegeben. Ein Klemmbereich ist mit dem Bezugszeichen I angegeben. Das Klemmmaß k berechnet sich nach der Formel k = I - s. Das elastische Ausgleichselement 4 wird dabei durch den Haltevorsprung 12 in die Ausgleichsöffnung 10 mit der Größe f des Klemmteil 16 gedrückt. Durch die Spannung in dem elastischen Ausgleichselement 4 wird die optische Komponente spielfrei geklemmt, ohne dass es zu überhöhten Verspannungen des Klemmteils 16 oder gar der optischen Komponente kommt. Die Haltekraft kann dabei durch Dimensionierung der Größe der Haltevorsprünge 12, des Durchmessers des Querschnitts des elastischen Ausgleichselements 4 und/oder der Abmessungen oder Ausgleichsöffnung 10 im Verhältnis zu dem jeweiligen Haltevorsprung 12 erfolgen.

Um zu vermeiden, dass durch die Klemmung entstehende Kräfte zu hoch werden, wird die optische Komponente nicht flächendeckend, sondern nur über einzelne Punkte gespannt. Das Klemmteil 16 weist an diesen Punkten die Ausgleichsöffnung 10 auf. Durch diese Maßnahme wird ein Teil der Klemmung des elastischen Ausgleichselements 4 durch eine Dehnung ersetzt, wodurch mehr Toleranzen kompensiert werden können. Die Materialstärke des Klemmteils 16 wird raumsparend für die teilweise Aufnahme des elastischen Ausgleichselements 4 mitgenutzt. Durch die Größe f der Ausgleichsöffnung 10 kann das aufzunehmende Toleranzfenster und die Niederhaltekraft des Klemmteils 16 ausgelegt werden.

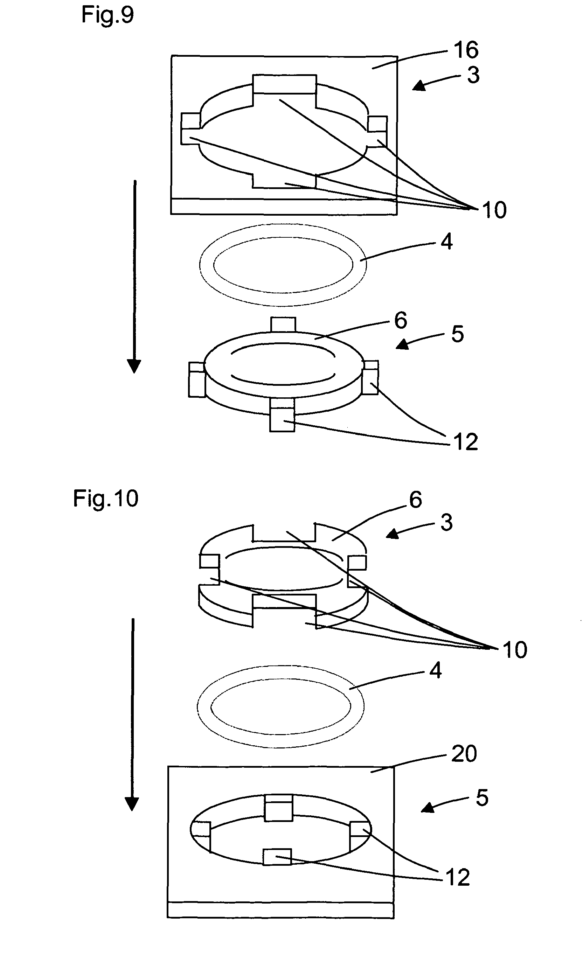

Figuren 9 bis 12 zeigen schematisch vereinfacht weitere Ausführungsbeispiele der Erfindung. Die Ausführungsbeispiele gemäß den Figuren 1 bis 12 sind dabei beliebig kombinierbar.

Gemäß Figur 9 bildet das Klemmteil 16 das erste Element 3. Das Klemmteil 16 weist eine Anzahl, nämlich vier Ausgleichsöffnungen 10 auf. Weiter ist als zweites Element 5 die optische Komponente 6 dargestellt mit einer Anzahl, nämlich vier Haltevorsprüngen 12. Die Haltevorsprünge 12 sind zugehörig zu den Ausgleichsöffnungen 10 angeordnet. Weiter weist das Klemmteil 16 eine Öffnung für den Durchtritt von Lichtstrahlen auf. Zwischen dem Klemmteil 16 und der optischen Komponente 6 wird das ringförmige elastische Ausgleichselement 4 verspannt, wodurch das Ausgleichselement 4 in Umfangsrichtung gedehnt wird. Die Befestigungsmittel können dabei an dem Klemmteil 16 und/oder an der optischen Komponente 6 angeordnet sein, um die Position zwischen dem Klemmteil 16 und der optischen Komponente 6 festzulegen und zu fixieren.

Gemäß Figur 10 bildet die optische Komponente 6 das erste Element 3. Die optische Komponente 6 weist Ausgleichsöffnungen 10 auf. Weiter ist als zweites Element 5 ein Grundträger 20 dargestellt. Der Grundträger 20 weist Haltevorsprünge 12 auf, die zu den Ausgleichsöffnungen 10 zugehörig angeordnet sind. Der Grundträger 20 weist eine Öffnung für den Durchtritt von Lichtstrahlen auf. Zwischen der optischen Komponente 6 und dem Grundträger 20 wird das ringförmige elastische Ausgleichselement 4 verspannt, wodurch das Ausgleichselement 4 wie bereits erläutert in Umfangsrichtung gedehnt wird. Die Befestigungsmittel können gemäß diesem Ausführungsbeispiel an der optischen Komponente 6 und/oder an dem Grundträger 20 befestigt sein.

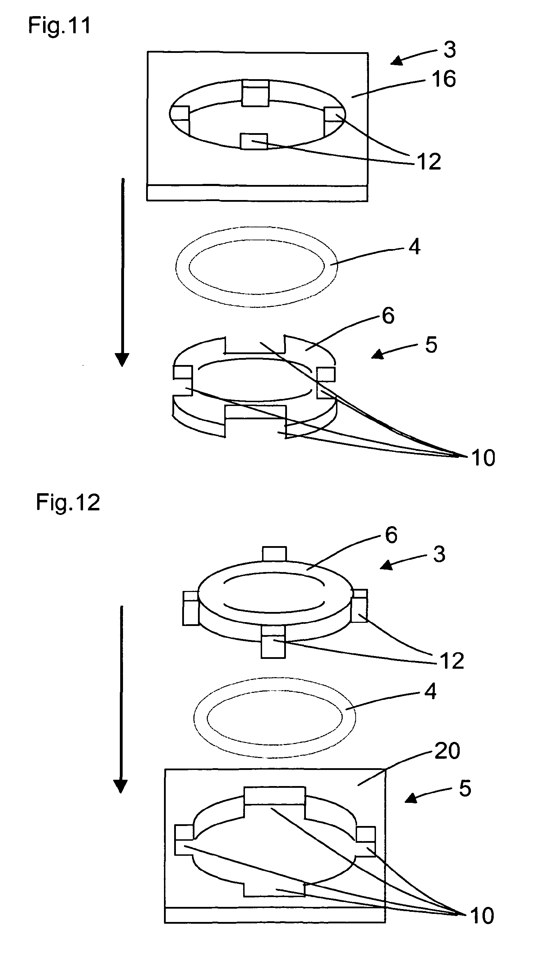

Figur 11 zeigt einen Optikträger bestehend aus dem Klemmteil 16 als erstes Element mit den Haltevorsprüngen 12. Weiter ist als zweites Element 5 die optische Komponente 6 mit den Ausgleichsöffnungen 10 dargestellt, welche zu den Haltevorsprüngen 12 zugehörig sind. Zwischen dem Klemmteil 16 und der optischen Komponente 6 wird das ringförmige elastische Ausgleichselement 4 verspannt. Gemäß diesem Ausführungsbeispiel können die Befestigungsmittel an dem Klemmteil 16 und/oder an der optischen Komponente 6 angeordnet sein.

Figur 12 zeigt einen Optikträger bestehend aus einer optischen Komponente 6 als erstes Element 3 mit den Haltevorsprüngen 12. Weiter besteht der Optikträger aus dem Grundträger 20 als zweites Element 5 mit den Ausgleichsöffnungen 10. Zwischen dem Grundträger 20 und der optischen Komponente 6 wird wiederum das ringförmige elastische Ausgleichselement 4 verspannt, wie bereits in den Figuren zuvor beschrieben.

### Bezugszeichen:

- 1: optoelektronische Sensor.
- 2: Optikträger
- 3: erstes Element
- 4: elastisches Ausgleichselement
- 5: zweites Element
- 6: optische Komponente
- 7: Auflageebene
- 8: Linse
- 10: Ausgleichsöffnungen
- 12: Haltevorsprung
- 16: Klemmteil
- 18: Schnappvorrichtung
- 20: Grundträger
- 22: Gehäuse
- 24: Frontscheibe
- 26: elektrischer Anschluss
- 28: Befestigungsmittel
- 30: Vorsprung
- 32: Befestigungsaufnahme
- k: Klemmmaß
- l: Klemmbereich
- s: Elastizitätsmaß
- f: Breite oder Weite der Ausgleichsöffnung
- g: Höhe des Haltevorsprungs

## Patentansprüche

1. Optikträger mit einem ersten Element (3), einem ringförmigen elastischen Ausgleichselement (4) und einem zweiten Element (5), wobei das elastische Ausgleichselement (4) zwischen dem ersten und dem zweiten Element (3, 5) angeordnet ist und das erste Element (3) eine optische Komponente (6) ist, die gegen das andere Element unter Vorspannung des elastischen Ausgleichselements (4) festlegbar ist,
**dadurch gekennzeichnet,**
**dass** das erste Element (3) mindestens zwei Haltevorsprünge (12) aufweist und das zweite Element (5) zu den Haltevorsprüngen (12) zugehörige Ausgleichsöffnungen (10) aufweist, wobei die Haltevorsprünge (12) am Umfang der optischen Komponente (6) radial zu einer optischen Achse der optischen Komponente (6) ausgedehnt sind und eine Auflageebene (7) aufweisen, wobei das elastische Ausgleichselement (4) auf den Haltevorsprüngen (12) aufliegt und bei Festlegung der Elemente (3, 5) zueinander das elastische Ausgleichselement (4) bei unveränderter radialer Position durch die Haltevorsprünge in die Ausgleichsöffnung in Längsrichtung parallel zur optischen Achse der optischen Komponente (6) gedehnt ist wobei Befestigungsmittel an dem zweiten Element (5) und/oder an der optischen Komponente (6) angeordnet sind, um eine Position zwischen dem zweiten Element (5) und der optischen Komponente (6) festzulegen und zu fixieren

2. Optikträger nach Anspruch 1, **dadurch gekennzeichnet, dass** entweder das erste Element (3) oder das zweite Element (5) ein Grundträger (20) oder ein Klemmteil (16) ist.

3. Optikträger nach Anspruch 2, **dadurch gekennzeichnet, dass** der Grundträger (20) und/oder das Klemmteil (16) eine Öffnung für Lichtstrahlen aufweist.

4. Optikträger nach einem der vorhergehenden Ansprüche, **dadurch gekennzeichnet, dass** die optische Komponente (6) eine Linse (8) ist.

5. Optikträger nach einem der vorhergehenden Ansprüche, **dadurch gekennzeichnet, dass** das Befestigungsmittel (28) durch eine Schnappvorrichtung (18) gebildet ist.

6. Verfahren zur Montage eines Optikträgers mit einem ersten Element (3), einem ringförmigen elastischen Ausgleichselement (4) und einem zweiten Element (5), wobei das elastische Ausgleichselement (4) zwischen dem ersten und dem zweiten Element (3, 5) angeordnet wird und das erste Element (3) eine optische Komponente (6) ist, die gegen das andere Element unter Vorspannung des elastischen Ausgleichselements (4) festgelegt wird,
**dadurch gekennzeichnet,**
**dass** das erste Element (3) mindestens zwei Haltevorsprünge (12) aufweist und das zweite Element (5) zu den Haltevorsprüngen (12) zugehörige Ausgleichsöffnungen (10) aufweist, wobei die Haltevorsprünge am Umfang der optischen Komponente (6) radial zu einer optischen Achse der optischen Komponente (6) ausgedehnt sind und eine Auflageebene (7) aüfweisen, wobei das elastische Ausgleichselement (4) auf den Haltevorsprüngen (12) aufliegt und bei Festlegung der Elemente (3, 5) zueinander das elastische Ausgleichselement (4) bei unveränderter radialer Position durch die Haltevorsprünge in die Ausgleichsöffnung in Längsrichtung parallel zur optischen Achse der optischen Komponente (6) gedehnt wird, wobei Befestigungsmittel an dem zweiten Element (5) und/oder an der optischen Komponente (6) angeordnet sind, um eine Position zwischen dem zweiten Element (5) und der optischen Komponente (6) festzulegen und zu fixieren.

## Claims

1. An optics carrier comprising a first element (3), a ring-shaped elastic compensation element (4) and a second element (5), wherein the elastic compensation element (4) is arranged between the first and second elements (3, 5) and the first element (3) is an optical component (6) which can be set with respect to the other element while preloading the elastic compensation element (4),
**characterised in that**
the first element (3) has at least two holding projections (12) and the second element (5) has compensation openings (10) associated with the holding projections (12), wherein the holding projections (12) are extended radially with respect to an optical axis of the optical component (6) at the periphery of the optical component (6) and have a support plane (7), wherein the elastic compensation element (4) lies on the holding projections (12) and is extended by the holding projections into the compensation opening in the longitudinal direction in parallel with the optical axis of the optical component (6) on a setting of the elements (3, 5) with respect to one another with an unchanged radial position, and wherein fastening means are arranged at the second element (5) and/or at the optical component (6) to set and to fix a position between the second element (5) and the optical component (6).

2. An optics carrier in accordance with claim 1, **characterised in that** either the first element (3) or the second element (5) is a base carrier (20) or a clamping part (16).

3. An optics carrier in accordance with claim 2, **characterised in that** the base carrier (20) and/or the clamping part (16) has an opening for light rays.

4. An optics carrier in accordance with any one of the preceding claims, **characterised in that** the optical component (6) is a lens (8).

5. An optics carrier in accordance with any one of the preceding claims, **characterised in that** the fastening means (28) is formed by a snap-in apparatus (18).

6. A method for installing an optics carrier comprising a first element (3), a ring-shaped elastic compensation element (4) and a second element (5), wherein the elastic compensation element (4) is arranged between the first and second elements (3, 5) and the first element (3) is an optical component (5) which is set with respect to the other element while preloading the elastic compensation element (4),
**characterised in that**
the first element (3) has at least two holding projections (12) and the second element (5) has compensation openings (10) associated with the holding projections (12), wherein the holding projections are extended radially with respect to an optical axis of the optical component (6) at the periphery of the optical component (6) and have a support plane (7), wherein the elastic compensation element (4) lies on the holding projections (12) and is extended by the holding projections into the compensation opening in the longitudinal direction in parallel with the optical axis of the optical component (6) on a setting of the elements (3, 5) with respect to one another with an unchanged radial position, and wherein fastening means are arranged at the second element (5) and/or at the optical component (6) to set and to fix a position between the second element (5) and the optical component (6).

## Revendications

1. Support optique comprenant un premier élément (3), un élément de compensation élastique de forme annulaire (4), et un second élément (5), l'élément de compensation élastique (4) étant agencé entre le premier et le second élément (3, 5), et le premier élément (3) étant un composant optique (6) qui est susceptible d'être immobilisé contre l'autre élément sous précontrainte de l'élément de compensation élastique (4),
**caractérisé en ce que**
le premier élément (3) comporte au moins deux saillies de retenue (12) et le second élément (5) comporte des ouvertures de compensation (10) associées aux saillies de retenue (12), dans lequel les saillies de retenue (12) sont allongées à la périphérie du composant optique (6) radialement par rapport à un axe optique du composant optique (6) et présentent un plan d'appui (7), dans lequel l'élément de compensation élastique (4) est en appui contre les saillies de retenue (12) et, lors de l'immobilisation des éléments (3, 5) l'un par rapport à l'autre, l'élément de compensation élastique (4) est allongé en direction longitudinale parallèlement à l'axe optique du composant optique (6) avec une position radiale inchangée au moyen des saillies de retenue dans l'ouverture de compensation, dans lequel des moyens de fixation sont agencés sur le second élément (5) et/ou sur le composant optique (6) afin d'immobiliser une position entre le second élément (5) et le composant optique (6) et de la fixer.

2. Support optique selon la revendication 1, **caractérisé en ce que** soit le premier élément (3) soit le second élément (5) est un support de base (20) ou une pièce de serrage (16).

3. Support optique selon la revendication 2, **caractérisé en ce que** le support de base (20) et/ou la pièce de serrage (16) comporte une ouverture pour des rayons lumineux.

4. Support optique selon l'une des revendications précédentes, **caractérisé en ce que** le composant optique (6) est une lentille (8).

5. Support optique selon l'une des revendications précédentes, **caractérisé en ce que** les moyens de fixation (28) sont formés par un dispositif à encliquetage (18).

6. Procédé pour le montage d'un support optique comprenant un premier élément (3), un élément de compensation élastique de forme annulaire (4), et un second élément (5), dans lequel l'élément de compensation élastique (4) est agencé entre le premier et le second élément (3, 5), et le premier élément (3) est un composant optique (6) qui est immobilisé contre l'autre élément sous précontrainte de l'élément de compensation élastique (4),
**caractérisé en ce que**
le premier élément (3) comporte au moins deux saillies de retenue (12) et le second élément (5) comporte des ouvertures de compensation (10) associées aux saillies de retenue (12), dans lequel les saillies de retenue sont allongées à la périphérie du composant optique (6) radialement par rapport à un axe optique du composant optique (6) et présentent un plan d'appui (7), dans lequel l'élément de compensation élastique (4) est en appui contre les saillies de retenue (12) et, lors de l'immobilisation des éléments (3, 5) l'un par rapport à l'autre, l'élément de compensation élastique (4) est allongé en direction longitudinale parallèlement à l'axe optique composant optique (6) avec une position radiale inchangée au moyen des saillies de retenue dans l'ouverture de compensation, dans lequel des moyens de fixation sont agencés sur le second élément (5) et/ou sur le composant optique (6), afin d'immobiliser une position entre le second élément (5) et le composant optique (6) et de la fixer.
